(19)

Europäisches Patentamt
European Patent Office
Office européen des brevets

(11) **EP 4 343 798 A1**

(12) **EUROPEAN PATENT APPLICATION**
published in accordance with Art. 153(4) EPC

(43) Date of publication:
**27.03.2024 Bulletin 2024/13**

(21) Application number: **22804823.7**

(22) Date of filing: **25.03.2022**

(51) International Patent Classification (IPC):
*H01F 38/14* [(2006.01)]   *H01F 1/24* [(2006.01)]
*H01F 1/37* [(2006.01)]   *H02J 50/00* [(2016.01)]
*H01F 27/28* [(2006.01)]   *B60L 53/12* [(2019.01)]
*C08L 83/00* [(2006.01)]   *C08L 101/00* [(2006.01)]
*C08L 101/04* [(2006.01)]

(52) Cooperative Patent Classification (CPC):
**H02J 50/005; B60L 53/12; C08L 83/00;
C08L 101/00; C08L 101/04; H01F 1/24; H01F 1/37;
H01F 27/28; H01F 38/14; H02J 50/00; H02J 50/10;**
Y02T 10/70; Y02T 10/7072; Y02T 90/14

(86) International application number:
**PCT/KR2022/004244**

(87) International publication number:
**WO 2022/244967 (24.11.2022 Gazette 2022/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.05.2021 KR 20210065654**

(71) Applicant: **SKC Co., Ltd.**
**Suwon-si, Gyeonggi-do 16338 (KR)**

(72) Inventors:
• **CHOI, Jong Hak**
  **Suwon-si, Gyeonggi-do 16338 (KR)**
• **KIM, Tae Kyoung**
  **Suwon-si, Gyeonggi-do 16338 (KR)**
• **KIM, Nah Young**
  **Suwon-si, Gyeonggi-do 16338 (KR)**
• **LEE, Seunghwan**
  **Suwon-si, Gyeonggi-do 16338 (KR)**

(74) Representative: **Dehns**
**St. Bride's House**
**10 Salisbury Square**
**London EC4Y 8JD (GB)**

(54) **WIRELESS CHARGING APPARATUS FOR TRANSPORTATION MEANS AND MAGNETIC COMPOSITE USED THEREFOR**

(57)    A wireless charging apparatus for a transportation means according to an embodiment comprises a magnetic unit having a moisture absorption rate adjusted to a specific range, and accordingly, high magnetic properties and charging efficiency may be provided under a frequency and high power applied to wireless charging. Therefore, the wireless charging apparatus can be applied to a transportation means, such as an electric vehicle requiring a large amount of power transmission between a transmitter and a receiver.

[Fig. 1]

100

120        111

**Description**

Technical Field

Embodiments relate to a wireless charging device for a transportation means such as an electric vehicle (EV) and a magnetic composite used therein.

Background Art

In recent years, the information and communication field is being developed at a very fast pace, and various technologies that comprehensively combine electricity, electronics, communication, and semiconductor are continuously being developed. In addition, as electronic devices tend to be more mobile, research on wireless communication and wireless power transmission technologies is being actively conducted in the communication field. In particular, research on a method for wirelessly transmitting power to electronic devices is being actively conducted.

The wireless power transmission refers to wirelessly transmitting power through space using inductive coupling, capacitive coupling, or an electromagnetic field resonance structure such as an antenna without physical contact between a transmitter that supplies power and a receiver that receives power. The wireless power transmission is suitable for portable communication devices, electric vehicles, and the like that require a large-capacity battery. Since the contacts are not exposed, there is little risk of a short circuit, and a charging failure phenomenon in a wired method can be prevented.

Meanwhile, as interest in electric vehicles has rapidly increased in recent years, interest in building charging infrastructure is increasing. Various charging methods have already appeared, such as electric vehicle charging using home chargers, battery replacement, rapid charging devices, and wireless charging devices. A new charging business model has also begun to appear (see Korean Laid-open Patent Publication No. 2011-0042403). In addition, electric vehicles and charging stations that are being tested begin to stand out in Europe. In Japan, electric vehicles and charging stations are being piloted, led by automakers and power companies.

[Prior Art Document]

(Patent Document 1) Korean Laid-open Patent Publication No. 2011-0042403

**Disclosure of Invention**

**Technical Problem**

Wireless charging devices currently used in mobile devices have undergone various improvements to enhance their performance and are being applied to products. In contrast, various attempts on the characteristics and structures of materials to increase the performance of wireless charging devices for use in a transportation means such as an electric vehicle are still insufficient. As an example, a wireless charging device in an electric vehicle is ordinarily installed under the vehicle body and is exposed to various external environments such as rain and humidity during driving or parking. Further, the frequency band for wireless charging is also different from that of mobile devices. Thus, it is difficult to adopt the configuration of a wireless charging device for mobile devices.

The present inventors have been interested in performance improvement in consideration of such an operating environment. In particular, the present inventors have noted that in a wireless charging device that requires large-capacity power transmission, such as an electric vehicle, a small change in the amount of moisture contained in the materials would have a huge impact on the magnetic properties and charging efficiency. As a result of research conducted by the present inventors, therefore, it has been discovered that if the moisture absorption rate of the magnetic unit provided in a wireless charging device is adjusted to a specific range, high magnetic properties and charging efficiency can be achieved under a frequency and a high output for wireless charging of an electric vehicle.

Accordingly, the embodiments aim to provide a wireless charging device that comprises a magnetic unit whose moisture absorption rate is adjusted to have high magnetic properties and charging efficiency, a transportation means comprising the same, and a magnetic composite used therein.

**Solution to Problem**

According to an embodiment, there is provided a wireless charging device for a transportation means, which comprises a coil unit comprising a conductive wire; and a magnetic unit disposed on the coil unit, wherein the magnetic unit has a moisture absorption rate of 0.5% by weight or less.

According to another embodiment, there is provided a transportation means, which comprises a power storage device; and a wireless charging device for receiving wireless power from the outside to supply it to the power storage device.

According to still another embodiment, there is provided a magnetic composite used in a wireless charging device of a transportation means, which comprises a matrix resin; and a plurality of magnetic particles disposed in the matrix resin and has a moisture absorption rate of 0.5% by weight or less.

**Advantageous Effects of Invention**

According to the embodiments, as the moisture absorption rate of the magnetic unit provided in a wireless charging device for a transportation means is adjusted to a specific range, high magnetic properties and charging efficiency can be achieved under a frequency and a high output for wireless charging of a transportation means such as an electric vehicle. In addition, since the magnetic unit comprises a magnetic composite in which a plurality of magnetic particles are dispersed in a matrix resin, it is possible to adjust the moisture absorption rate according to the type and content of the matrix resin.

Accordingly, the wireless charging device comprising the magnetic unit can be advantageously used in a transportation means such as electric vehicles that require large-capacity power transmission between a transmitter and a receiver.

**Brief Description of Drawings**

Fig. 1 is a cross-sectional view of a magnetic unit according to an embodiment.
Fig. 2 is a cross-sectional view of a magnetic unit according to another embodiment.
Fig. 3 is an exploded perspective view of a wireless charging device according to an embodiment.
Fig. 4 shows a transportation means comprising a wireless charging device according to an embodiment.

<Explanation of Reference Numerals>

| | | | |
|---|---|---|---|
| 1: | electric vehicle | 10: | wireless charging device |
| 21: | receiver | 22: | transmitter |
| 100: | magnetic unit according to an embodiment | | |
| 100': | magnetic unit according to another embodiment | | |
| 111: | matrix resin | 112: | outer layer |
| 120: | magnetic particles | 200: | coil unit |
| 300: | shield unit | 400: | support unit |

**Best Mode for Carrying out the Invention**

In the following description of the embodiments, in the case where an element is mentioned to be formed "on" or "under" another element or connected or coupled to each other, it encompasses formation, connection, or combination of these elements in a direct way or an indirect way via another element. In addition, it should be understood that the criteria for the on and under of each component may vary depending on the direction in which the object is observed.

In the present specification, if it is determined that a detailed description of a related known constitution or function may obscure the gist of the present invention, the detailed description thereof will be omitted. In addition, for the sake of description, the sizes of individual elements in the appended drawings may be exaggeratedly depicted or omitted, and they may differ from the actual sizes.

Throughout the present specification, when a part is referred to as "comprising" an element, it is understood that other elements may be comprised, rather than other elements are excluded, unless specifically stated otherwise.

In addition, all numbers expressing the physical properties, dimensions, and the like of elements used herein are to be understood as being modified by the term "about" unless otherwise indicated.

In the present specification, a singular expression is understood to encompass a singular or plural expression, interpreted in context, unless otherwise specified.

**Wireless charging device**

The wireless charging device for a transportation means according to an embodiment comprises a coil unit comprising a conductive wire; and a magnetic unit disposed on the coil unit, wherein the magnetic unit has a moisture absorption rate of 0.5% by weight or less.

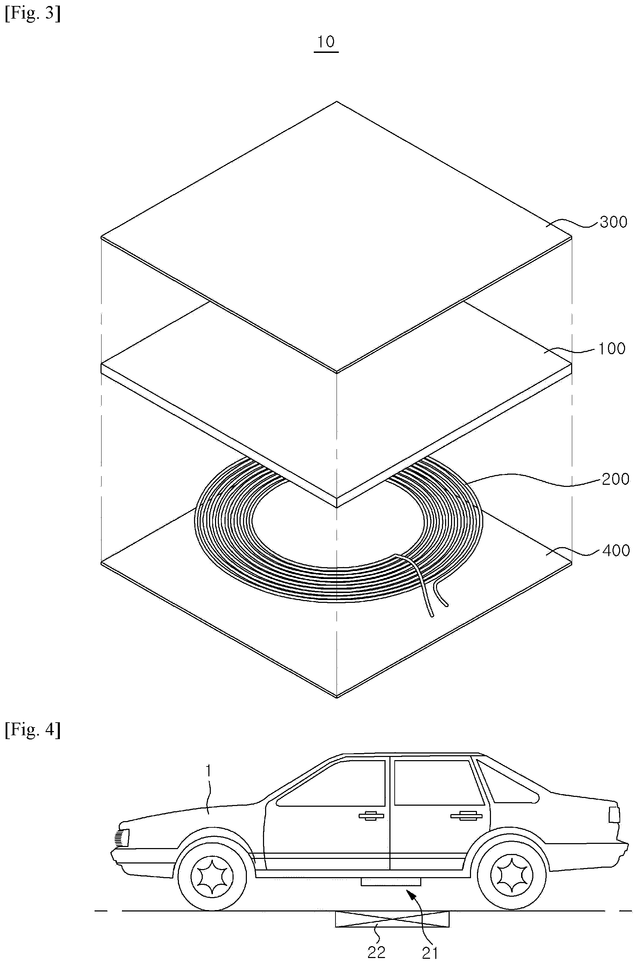

Fig. 3 is an exploded perspective view of a wireless charging device according to an embodiment.

Referring to Fig. 3, the wireless charging device (10) comprises a coil unit (200) comprising a conductive wire; and a magnetic unit (100) disposed on the coil unit (200), and it may further comprise a shield unit (300) disposed on the magnetic unit (300) and a support unit (400) supporting the coil unit (200). In addition, the wireless charging device (10) may further comprise a spacer for securing a space between the shield unit (300) and the magnetic unit (300). In addition, the wireless charging device (10) may further comprise a housing for accommodating and appropriately disposing the components described above.

Hereinafter, each constitutional element of the wireless charging device will be described in detail.

**Coil unit**

The coil unit comprises a conductive wire, and the conductive wire may comprise a conductive material, for example, a conductive metal. Specifically, the conductive wire may comprise at least one metal selected from the group consisting of copper, nickel, gold, silver, zinc, and tin.

In addition, the conductive wire may have an insulating sheath. For example, the insulating sheath may comprise an insulating polymer resin. Specifically, the insulating sheath may comprise a polyvinyl chloride (PVC) resin, a polyethylene (PE) resin, a Teflon resin, a silicone resin, a polyurethane resin, or the like.

The conductive wire may have a diameter in the range of, for example, 1 mm to 10 mm, 1 mm to 5 mm, or 1 mm to 3 mm.

The conductive wire may be one wound in the form of a planar coil. Specifically, the planar coil may comprise a planar spiral coil. Here, the shape of the planar coil may be an ellipse, a polygon, or a polygonal shape with rounded corners, but it is not particularly limited thereto.

The planar coil may have an outer diameter of 5 cm to 100 cm, 10 cm to 50 cm, 10 cm to 30 cm, 20 cm to 80 cm, or 50 cm to 100 cm. As a specific example, the planar coil may have an outer diameter of 10 cm to 50 cm.

In addition, the planar coil may have an inner diameter of 0.5 cm to 30 cm, 1 cm to 20 cm, or 2 cm to 15 cm.

The number of turns of the planar coil wound may be 5 to 50 times, 10 to 30 times, 5 to 30 times, 15 to 50 times, or 20 to 50 times. As a specific example, the planar coil may be formed by winding the conductive wire 10 to 30 times.

In addition, the distance between the conductive wires in the planar coil shape may be 0.1 cm to 1 cm, 0.1 cm to 0.5 cm, or 0.5 cm to 1 cm.

Within the preferred dimensions and specification ranges of the planar coil as described above, it can be appropriately used in the fields such as electric vehicles that require large-capacity power transmission.

The wireless charging device may further comprise a support unit for supporting the coil unit. The material and structure of the support unit may be a material and structure of a conventional support unit used in a wireless charging device. The support unit may have a flat plate structure or a structure in which a groove is formed in compliance with a coil shape to fix the coil.

**Magnetic unit**

The magnetic unit is disposed on the coil unit.

The magnetic unit may be disposed to be spaced apart from the coil unit by a predetermined interval. For example, the spaced distance between the magnetic unit and the coil unit may be 0.2 mm or more, 0.5 mm or more, 0.2 mm to 3 mm, or 0.5 mm to 1.5 mm.

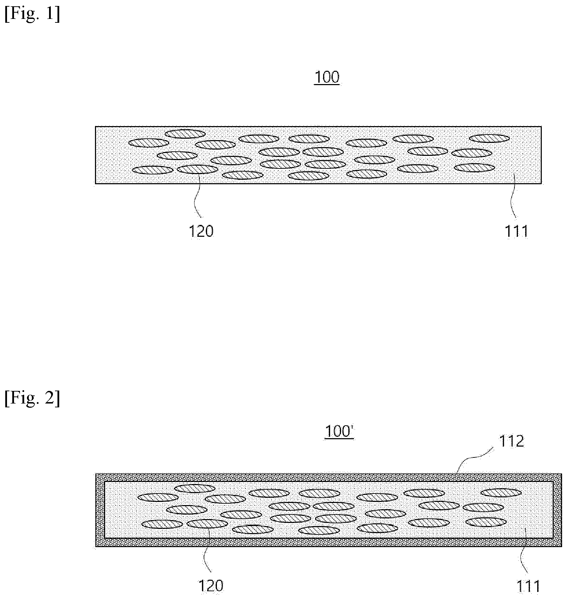

Fig. 1 is a cross-sectional view of a magnetic unit according to an embodiment. Fig. 2 is a cross-sectional view of a magnetic unit according to another embodiment.

Referring to Fig. 1, the magnetic unit (100) according to an embodiment comprises a magnetic composite comprising a matrix resin (111); and a plurality of magnetic particles (120) disposed in the matrix resin (111).

Referring to Fig. 2, the magnetic unit (100') according to another embodiment may further comprise an outer layer (112) surrounding the surface of the magnetic composite.

According to an embodiment, the magnetic unit has a moisture absorption rate of 0.5% by weight or less. For example, the moisture absorption rate of the magnetic unit may be 0.4% by weight or less, 0.3% by weight or less, 0.2% by weight or less, 0.1% by weight or less, or 0.05% by weight or less.

The moisture absorption rate of the magnetic unit may be measured by immersion thereof in water at room temperature for 24 hours. Specifically, the moisture absorption rate (SR) of the magnetic unit may be represented by the following Equation (1).

$$SR = [(B - A) / A] \times 100 \dots (1)$$

Here, A is the weight (g) after the magnetic unit is dried, and B is the weight (g) after the magnetic unit is immersed in water at room temperature for 24 hours, and water on the surface is removed.

According to the embodiments, as the moisture absorption rate of the magnetic unit provided in a wireless charging device for a transportation means is adjusted to a specific range, high magnetic properties and charging efficiency can be achieved under a frequency and a high output for wireless charging of a transportation means. As described above, the embodiment is characterized in that it provides a wireless charging device in which the moisture absorption rate of the magnetic unit is adjusted as an effective means for improving the wireless charging performance of an electric vehicle. In addition, since the magnetic unit has a composition in which a plurality of magnetic particles are dispersed in a matrix resin, it is possible to adjust the moisture absorption rate according to the type and content of the matrix resin, additional coating, or the like.

Accordingly, the wireless charging device comprising the magnetic unit can be advantageously used in an electric vehicle that requires large-capacity power transmission between a transmitter and a receiver.

In addition, the characteristics of the surface of the magnetic unit for water may be adjusted. As an example, the surface of the magnetic unit may have a contact angle of 80° or more for water. Within the above range, it is more advantageous for providing high magnetic properties and charging efficiency in the frequency and output conditions adopted for wireless charging of a transportation means such as an electric vehicle. For example, the contact angle of the surface of the magnetic unit for water may be 85° or more, 90° or more, or 95° or more, may be 150° or less, 140° or less, 130° or less, or 120° or less, specifically, a range of 95° to 130°.

Hereinafter, the respective components and characteristics of the magnetic unit according to an embodiment will be described in detail.

**Matrix resin**

The matrix resin serves as a binder of the magnetic particles and controls the moisture absorption rate of the magnetic unit.

Examples of the matrix resin may include general engineering plastics (such as polycarbonate resins, polyphenylene oxide resins, polyamide resins, polyacetal resins, and polybutylene terephthalate resins), highly thermal-resistant engineering plastics (such as polysulfone resins, polyarylate resins, polyetherimide resins, polyether sulfone resins, polyphenylene sulfide resins, polyimide resins, Teflon resins, and polyether ether ketone resins), and other general-purpose resins (such as acrylonitrile-butadiene-styrene (ABS) resins, polystyrene resins, polyvinyl chloride resins, polymethyl methacrylate resins, styrene-acrylonitrile (SAN) resins, polypropylene resins, and polyethylene resins).

As a specific example, the matrix resin may be at least one selected from the group consisting of a polyimide resin, a polyamide resin, a polyamide-imide resin, a polycarbonate resin, an acrylonitrile-butadiene-styrene (ABS) resin, a polypropylene resin, a polyethylene resin, a polystyrene resin, a polyphenylene sulfide (PPS) resin, a polyether ether ketone (PEEK) resin, an acrylic resin, a polyurethane resin, a polyester resin, an isocyanate resin, and an epoxy resin.

As an example, the matrix resin may be a thermoplastic polymer resin. More specifically, if the matrix resin comprises at least one selected from a thermoplastic polyamide resin and a thermoplastic polyimide resin, it may be more advantageous in terms of thermal resistance, moisture resistance, rust resistance, and/or corrosion resistance.

The content of the matrix resin may be 5% by weight or more, 10% by weight or more, 15% by weight or more, or 20% by weight or more, and may be 40% by weight or less, 30% by weight or less, 20% by weight or less, or 15% by weight or less, based on the total weight of the magnetic composite. As a specific example, the content of the matrix resin may be 5% by weight to 40% by weight, 5% by weight to 20% by weight, 5% by weight to 15% by weight, or 7% by weight to 15% by weight, based on the total weight of the magnetic composite.

**Magnetic particles**

The magnetic particles allow the magnetic unit to have magnetic properties required for a wireless charging device.

The magnetic particles may be metal-based magnetic particles, and the type is not particularly limited. For example, the magnetic particles may comprise ferrite-based, Fe-based nanocrystalline-based, Fe-based amorphous material.

Specifically, the magnetic particles may be oxide magnetic particles such as ferrite (Ni-Zn-based, Mg-Zn-based, Mn-Zn-based ferrite, and the like); metallic magnetic particles such as permalloy, sendust, Fe-Si-Cr alloy, and Fe-Si-nanocrystal; or mixed particles thereof. More specifically, the magnetic particles may be sendust particles having a Fe-Si-Al alloy composition.

As an example, the magnetic particles may have a composition of the following Formula 1.

$$[\text{Formula 1}] \qquad Fe_{1-a-b-c} Si_a X_b Y_c$$

In the above formula, X is Al, Cr, Ni, Cu, or a combination thereof; Y is Mn, B, Co, Mo, or a combination thereof; $0.01 \leq a \leq 0.2$, $0.01 \leq b \leq 0.1$, and $0 \leq c \leq 0.05$.

The average particle diameter of the magnetic particles is not particularly limited, but it may be, for example, 3 nm to 1 mm, 1 $\mu$m to 300 $\mu$m, 1 $\mu$m to 50 $\mu$m, or 1 $\mu$m to 10 $\mu$m.

The content of the magnetic particles may be 50% by weight or more or 70% by weight or more based on the total weight of the magnetic composite (or magnetic unit). For example, the content of the magnetic particles may be 50% by weight to 95% by weight, 70% by weight to 95% by weight, 70% by weight to 90% by weight, 75% by weight to 90% by weight, 75% by weight to 95% by weight, 80% by weight to 95% by weight, or 80% by weight to 90% by weight, based on the total weight of the magnetic composite.

In addition, the content of the magnetic particles may be 20% by volume or more or 35% by volume or more based on the total volume of the magnetic composite (or magnetic unit). For example, the content of the magnetic particles may be 20% by volume to 70% by volume, 35% by volume to 65% by volume, 35% by volume to 60% by volume, 40% by volume to 60% by volume, 40% by volume to 70% by volume, 45% by volume to 70% by volume, or 45% by volume to 60% by volume, based on the total volume of the magnetic composite.

As a specific example, the magnetic unit may comprise the magnetic particles in an amount of 70% by weight to 95% by weight based on the total weight of the magnetic composite and 35% by volume to 65% by volume based on the total volume of the magnetic composite. Within the above content ranges, it may be more advantageous in terms of thermal resistance, moisture resistance, rust prevention, and/or corrosion resistance.

**Preparation of a magnetic composite**

The magnetic composite may be prepared using a composition for molding in which the magnetic particles are dispersed in a matrix resin.

The magnetic particles may be coated with a polymer resin for protection from moisture and the like and then dispersed in a matrix resin. Accordingly, the magnetic unit may further comprise a protective layer surrounding each of the magnetic particles. The protective layer may comprise a silicone-based resin, a fluorine-based resin, an epoxy-based resin, a urethane-based resin, or the like. Specifically, the protective layer may comprise at least one selected from a silicone-based resin and a fluorine-based resin.

In addition, components such as rust inhibitors and antioxidants may be further added to the composition for molding in an amount of 0.01% by weight to 1% by weight, respectively.

The magnetic composite may be formed, for example, in a sheet shape by extruding the molding composition or in a desired shape by injecting it into a mold.

As an example, the magnetic composite may be formed in a sheet shape. Specifically, it may be prepared by a process comprising mixing magnetic particles and a matrix resin, extruding it in a sheet shape, and drying it. In such an event, the magnetic particles and the matrix resin may be used in the same types and contents as exemplified above. The sheet thus prepared may have a thickness of 10 $\mu$m to 500 $\mu$m, 50 $\mu$m to 250 $\mu$m, 100 $\mu$m to 200 $\mu$m, or about 150 $\mu$m. 10 or more, 20 or more, or 50 or more of the sheet may be laminated to prepare a block-type magnetic composite having a thickness of 1 mm or more.

As another example, the magnetic composite may be prepared as a large-area block having a constant thickness by a molding process using a mold. The molding may be carried out by injecting the raw materials for the magnetic composite into a mold by injection molding. Specifically, the magnetic composite may be prepared by injecting a composition for molding into a mold by an injection molding machine. In such an event, the internal shape of the mold may be designed as a three-dimensional structure, so that the three-dimensional structure of the magnetic composite may be easily achieved. It is impossible that such a process is carried out in the case where a conventional sintered ferrite sheet is used as a magnetic unit.

**Outer layer**

The magnetic unit may further comprise an outer layer surrounding the surface of the magnetic composite. For example, the outer layer may be formed using a composition prepared by mixing a polymer resin with a solvent.

Specifically, toluene, ethanol, acetone, or the like as the solvent may be mixed in an amount of 10 to 200 parts by weight based on 100 parts by weight of the polymer resin.

The outer layer may be formed by coating or other known methods. For example, it may be formed by spin coating, dipping, spraying, drop casting, doctor blade, bar coating, slot die coating, micro gravure coating, coma coating, or printing.

When the outer layer is formed to a thickness of 0.01 $\mu$m to 10 $\mu$m, it may be more advantageous in terms of moisture resistance, rust resistance, corrosion resistance, and thermal resistance. More specifically, the coating thickness may be 1 $\mu$m to 5 $\mu$m.

The outer layer may be coated on the outer side of the magnetic composite to protect the surface and adjust the moisture absorption rate of the magnetic unit.

According to the embodiment, it is preferable that the characteristics of the outer layer for water are adjusted. The outer layer may have a contact angle of 50° or more for water. Alternatively, the outer layer may have a contact angle of 70° or more for water. Specifically, the outer layer may have a contact angle of 80° to 130° for water.

The outer layer may comprise a silicone-based resin, a fluorine-based resin, an epoxy-based resin, a urethane-based resin, or the like. Specifically, the outer layer may comprise at least one selected from a silicone-based resin and a fluorine-based resin.

**Characteristics of the magnetic unit**

The magnetic unit may have magnetic characteristics of a certain level in the vicinity of a standard frequency for wireless charging of an electric vehicle. The standard frequency for wireless charging of an electric vehicle may be less than 100 kHz, specifically, 79 kHz to 90 kHz, more specifically, about 85 kHz. It is a band distinct from the frequency applied to mobile electronic devices such as cell phones.

The magnetic unit has a high magnetic permeability and a low magnetic permeability loss in a wireless charging frequency band, so that the charging efficiency is excellent.

For example, the magnetic permeability of the magnetic unit may be 10 or more, 50 or more, 100 or more, or 150 or more in a frequency band of 79 kHz to 90 kHz. Specifically, the magnetic unit may have a magnetic permeability of 200 or more in a frequency band of 79 kHz to 90 kHz.

More specifically, the magnetic permeability of the magnetic unit may be 10 to 500, 50 to 300, or 100 to 250 in a frequency band of 79 kHz to 90 kHz.

In addition, the magnetic permeability loss of the magnetic unit may be 100 or less, 50 or less, 20 or less, or 10 or less in a frequency band of 79 kHz to 90 kHz. More specifically, the magnetic permeability loss of the magnetic unit may be 1 to 100, 1 to 50, 1 to 20, or 1 to 15 in a frequency band of 79 kHz to 90 kHz.

In addition, the ratio of magnetic permeability to magnetic permeability loss of the magnetic unit may be 5 or more, 10 or more, or 15 or more in a frequency band of 79 kHz to 90 kHz. Specifically, the ratio of magnetic permeability to magnetic permeability loss of the magnetic unit may be 10 or more in a frequency band of 79 kHz to 90 kHz. More specifically, the ratio of magnetic permeability to magnetic permeability loss of the magnetic unit may be 5 to 50, 10 to 40, 10 to 30, or 10 to 20 in a frequency band of 79 kHz to 90 kHz.

In addition, the magnetic unit according to an embodiment may have a specific correlation between magnetic permeability and moisture absorption rate at a standard frequency for wireless charging of an electric vehicle.

As an example, the magnetic unit may further satisfy the following Relationship (2).

$$6 \leq (100 - P) / M \ ... \ (2)$$

In the above relationship, M is the moisture absorption rate (% by weight) when the magnetic unit is immersed in water for 24 hours at room temperature, P is the percentage (%) of magnetic permeability thereof at a frequency of 85 kHz when a magnetic permeability of 200 is 100%, and M and P in the above Relationship (2) are numerical values exclusive of units. In addition, M in Relationship (2) may be calculated by Equation (1) above.

In the magnetic unit according to an embodiment, the value of (100 - P)/M in Relationship (2) is 6 or more; thus, it is possible to effectively improve the magnetic permeability by adjusting the moisture absorption rate. The value of (100 - P)/M in Relationship (2) may be 6 or more, 8 or more, or 10 or more, specifically, 6 to 15, 6 to 12, or 8 to 12.

The characteristics of the magnetic unit exemplified above are primarily attributable to the magnetic composite of the matrix resin and the magnetic particles constituting it. Thus, characteristics such as magnetic permeability, moisture absorption rate, and contact angle of the magnetic composite may be at the same level as the characteristics of the magnetic unit exemplified above.

**Shield unit**

The shield unit is disposed on the magnetic unit.

The shield unit suppresses electromagnetic interference (EMI) that may be generated by leakage of electromagnetic waves to the outside through electromagnetic shielding.

The shield unit may be disposed to be spaced apart from the magnetic unit by a predetermined interval. For example, the spaced distance between the shield unit and the magnetic unit may be 3 mm or more, 5 mm or more, 3 mm to 10 mm, or 4 mm to 7 mm.

In addition, the spaced distance between the shield unit and the coil unit may be 10 mm or more or 15 mm or more, specifically, 10 mm to 30 mm or 10 mm to 20 mm.

The material of the shield unit may be, for example, a metal. Thus, the shield unit may be a metal plate, but it is not particularly limited thereto. As a specific example, the material of the shield unit may be aluminum. Other metals or alloy materials having an electromagnetic wave shielding capability may be used.

The shield unit may have a thickness of 0.2 mm to 10 mm, 0.5 mm to 5 mm, or 1 mm to 3 mm. In addition, the shield unit may have an area of 200 cm$^2$ or more, 400 cm$^2$ or more, or 600 cm$^2$ or more.

**Transportation means**

The transportation means according to an embodiment comprises a power storage device; and the wireless charging device for receiving wireless power from the outside to supply it to the power storage device.

Fig. 4 shows a transportation means (1), specifically, an electric vehicle provided with a wireless charging device. The electric vehicle may be charged wirelessly in a parking area equipped with a wireless charging system for an electric vehicle. The transportation means comprises a wireless charging device as a receiver. For example, the wireless charging device may serve as a receiver (21) for wireless charging of the transportation means (1) and may receive power from a transmitter (22) for wireless charging.

The configuration and characteristics of each component of the wireless charging device adopted in the transportation means are as described in the above embodiment.

The wireless charging device may be provided under the transportation means. The transportation means comprises a power storage device, for example, a battery. The wireless charging device may receive power wirelessly and supply it to the power storage device, and the power storage device may supply power to a driving system of the transportation means. The power storage device may be charged by power supplied from the wireless charging device or an additional wired charging device.

In addition, the transportation means may further comprise a signal transmitter for transmitting information about the charging to the transmitter of the wireless charging system. The information about such charging may be charging efficiency such as charging speed, charging extent, and the like.

**Mode for the Invention**

The present invention will be described in more detail with reference to the following various examples. However, the examples are not limited to those described below.

**Example 1: Preparation of a magnetic unit (magnetic composite)**

A polyamide resin (L1724k, Daicel-Evonik, Ltd.) as a matrix resin was mixed with sandust powder (C1F-02A, Crystallite Technology, Inc.) having an average particle diameter of 35 μm as magnetic particles to prepare a composition for molding. The composition for molding was molded to prepare a pad-shaped magnetic unit using an injection molding device at a temperature of about 260°C. In such an event, the mixing ratio for the components was adjusted to obtain magnetic units having various moisture absorption rates.

**Example 2: Preparation of a magnetic unit (coating of an outer layer on a magnetic composite)**

A silicone resin (Siltec) was mixed with methylene chloride as a solvent to prepare a composition having a solids content of about 1.0% by weight. The composition was coated on the surface of the magnetic unit prepared in Example 1 at about 75°C by a spray coating device to form an outer layer having a thickness of 1 μm.

**Test Example 1: moisture absorption rate**

A magnetic unit sample was dried in a hot air oven at 50°C for 24 hours or longer. The power was turned off, and it was cooled at room temperature. The initial weight (A) (unit: g) of the sample was measured with a precision balance. The sample was then immersed in water at room temperature for 24 hours. The moisture on the surface of the sample was removed, and the weight (B) (unit: g) thereof was measured. The moisture absorption rate (SR) (unit: % by weight) was calculated based on the above according to the following equation.

$$SR = [(B - A) / A] \times 100$$

**Test Example 2: magnetic permeability**

The magnetic permeability of the magnetic units having various moisture absorption rates at 85 kHz was measured using an impedance analysis device. Here, the relative percentage when the magnetic permeability (about 200) of a magnetic unit sample having a moisture absorption rate of 0.01% by weight is 100% is shown in the table below.

**Test Example 3: charging efficiency**

The charging efficiency was measured by SAE J2954 WPT2 Z2 class standard test method. Specifically, a coil unit and a frame under the SAE J2954 WPT2 Z2 class standard test specifications were used, and a magnetic unit, a spacer, and an aluminum plate were stacked to prepare a receiving pad (35 cm × 35 cm) and a transmitting pad (75 cm × 60 cm). The charging efficiency was evaluated under the same conditions of an output power of 6.6 kW at a frequency of 85 kHz.

The results are shown in the table below.

Table 1]

| No. | Composition of magnetic unit (parts by weight) | | Outer layer Coating | Moisture absorption rate of the magnetic unit | Magnetic permeability (relative value) (85 kHz) | Charging efficiency |
|---|---|---|---|---|---|---|
| | Matrix Resin | Magnetic particles | | | | |
| 1 | 11 | 89 | ○ | 0.01% by weight | 100% | 89% |
| 2 | 12 | 88 | ○ | 0.10% by weight | 99% | 89% |
| 3 | 13 | 87 | ○ | 0.30% by weight | 98% | 89% |
| 4 | 14 | 86 | ○ | 0.50% by weight | 95% | 88% |
| 5 | 16 | 84 | × | 1.00% by weight | 88% | 85% |

As can be seen from the above table, the magnetic permeability at a frequency applied to a wireless charging device of an electric vehicle and the charging efficiency at a high output significantly varied with the moisture absorption rate of the magnetic unit.

In particular, the magnetic units having a moisture absorption rate of 0.5% by weight or less were overall excellent in magnetic permeability and charging efficiency; thus, they may be applied to a wireless charging device of an electric vehicle. In contrast, in the magnetic units having a moisture absorption of greater than 0.5% by weight, the magnetic permeability and charging efficiency were steeply decreased; thus, they are not suitable for application to a wireless charging device of an electric vehicle.

**Claims**

1. A wireless charging device for a transportation means, which comprises a coil unit comprising a conductive wire; and a magnetic unit disposed on the coil unit, wherein the magnetic unit has a moisture absorption rate of 0.5% by weight or less.

2. The wireless charging device for a transportation means of claim 1, wherein the moisture absorption rate (SR) of the magnetic unit is represented by the following Equation (1):

$$SR = [(B - A) / A] \times 100 \ ... \ (1)$$

in the above equation, A is the weight (g) after the magnetic unit is dried, and B is the weight (g) after the magnetic unit is immersed in water at room temperature for 24 hours, and water on the surface is removed.

3. The wireless charging device for a transportation means of claim 1, wherein the magnetic unit comprises a magnetic composite comprising a matrix resin; and a plurality of magnetic particles disposed in the matrix resin.

4. The wireless charging device for a transportation means of claim 3, wherein the magnetic unit further comprises a protective layer surrounding each of the magnetic particles.

5. The wireless charging device for a transportation means of claim 3, wherein the matrix resin is at least one selected from the group consisting of a polyimide resin, a polyamide resin, a polyamide-imide resin, a polycarbonate resin, an acrylonitrile-butadiene-styrene (ABS) resin, a polypropylene resin, a polyethylene resin, a polystyrene resin, a polyphenylene sulfide (PPS) resin, a polyether ether ketone (PEEK) resin, an acrylic resin, a polyurethane resin, a polyester resin, an isocyanate resin, and an epoxy resin.

6. The wireless charging device for a transportation means of claim 3, wherein the magnetic unit comprises the magnetic particles in an amount of 70% by weight to 95% by weight based on the total weight of the magnetic composite and in an amount of 35% by volume to 65% by volume based on the total volume of the magnetic composite.

7. The wireless charging device for a transportation means of claim 3, wherein the magnetic unit further comprises an outer layer surrounding the surface of the magnetic composite.

8. The wireless charging device for a transportation means of claim 4 or 7, wherein the protective layer and the outer layer each comprise at least one selected from a silicone-based resin and a fluorine-based resin.

9. The wireless charging device for a transportation means of claim 1, wherein the surface of the magnetic unit has a contact angle of 80° or more for water.

10. The wireless charging device for a transportation means of claim 1, wherein the magnetic unit satisfies the following Relationship (2):

$$6 \leq (100 - P) / M \ldots (2)$$

in the above relationship, M is the moisture absorption rate (% by weight) when the magnetic unit is immersed in water for 24 hours at room temperature, P is the percentage (%) of magnetic permeability thereof at a frequency of 85 kHz when a magnetic permeability of 200 is 100%, and M and P in the above Relationship (2) are numerical values exclusive of units.

11. A transportation means, which comprises a power storage device; and a wireless charging device for receiving wireless power from the outside to supply it to the power storage device, wherein the wireless charging device comprises a coil unit comprising a conductive wire; and a magnetic unit disposed on the coil unit, and the magnetic unit has a moisture absorption rate of 0.5% by weight or less.

12. A magnetic composite used in a wireless charging device of a transportation means, which comprises a matrix resin; and a plurality of magnetic particles disposed in the matrix resin and has a moisture absorption rate of 0.5% by weight or less.

[Fig. 1]

<u>100</u>

<u>120</u>                                                             111

[Fig. 2]

<u>100'</u>          112

120                                                             111

[Fig. 3]

[Fig. 4]

<table>
<tr><td colspan="2"><b>INTERNATIONAL SEARCH REPORT</b></td><td>International application No.<br><b>PCT/KR2022/004244</b></td></tr>
</table>

| | |
|---|---|
| **A.** | **CLASSIFICATION OF SUBJECT MATTER** |

**H01F 38/14**(2006.01)i; **H01F 1/24**(2006.01)i; **H01F 1/37**(2006.01)i; **H02J 50/00**(2016.01)i; **H01F 27/28**(2006.01)i; **B60L 53/12**(2019.01)i; **C08L 83/00**(2006.01)i; **C08L 101/00**(2006.01)i; **C08L 101/04**(2006.01)i

According to International Patent Classification (IPC) or to both national classification and IPC

| | |
|---|---|
| **B.** | **FIELDS SEARCHED** |

Minimum documentation searched (classification system followed by classification symbols)

H01F 38/14(2006.01); B29C 45/00(2006.01); B60L 53/12(2019.01); C08K 9/06(2006.01); C08L 77/00(2006.01); H01F 1/01(2006.01); H01F 1/06(2006.01); H01F 1/08(2006.01); H01F 1/147(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 코일(coil), 자성(magnetic), 흡습(moisture absorption), 수지(resin)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y<br><br>A | KR 10-2021-0050920 A (SKC CO., LTD.) 10 May 2021 (2021-05-10)<br>    See paragraphs [0028]-[0174] and figure 1. | 1-11<br><br>12 |
| X<br><br>Y | JP 2005-209947 A (MITSUBISHI ELECTRIC CORP.) 04 August 2005 (2005-08-04)<br>    See paragraphs [0017]-[0030] and claim 1. | 12<br><br>1-11 |
| Y | JP 2002-356614 A (NICHIA CHEM IND LTD.) 13 December 2002 (2002-12-13)<br>    See paragraphs [0009]-[0019]. | 2,4,7-10 |
| A | US 2017-0275438 A1 (FUJI POLYMER INDUSTRIES CO., LTD.) 28 September 2017 (2017-09-28)<br>    See paragraphs [0024]-[0058] and figure 1. | 1-12 |

☑ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **28 June 2022** | **28 June 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2022/004244** |

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| A | US 2014-0132383 A1 (MATSUURA, Hitoshi et al.) 15 May 2014 (2014-05-15)<br>See paragraphs [0025]-[0058] and figures 1-3. | 1-12 |

Form PCT/ISA/210 (second sheet) (July 2019)

**EP 4 343 798 A1**

<table>
<tr><td colspan="2" align="center"><b>INTERNATIONAL SEARCH REPORT</b><br>Information on patent family members</td><td colspan="2">International application No.<br><b>PCT/KR2022/004244</b></td></tr>
</table>

| Patent document cited in search report | | | Publication date (day/month/year) | Patent family member(s) | | | Publication date (day/month/year) |
|---|---|---|---|---|---|---|---|
| KR | 10-2021-0050920 | A | 10 May 2021 | KR | 10-2021-0050921 | A | 10 May 2021 |
| | | | | KR | 10-2280257 | B1 | 21 July 2021 |
| | | | | KR | 10-2280259 | B1 | 21 July 2021 |
| | | | | WO | 2021-085955 | A1 | 06 May 2021 |
| JP | 2005-209947 | A | 04 August 2005 | | None | | |
| JP | 2002-356614 | A | 13 December 2002 | JP | 4154685 | B2 | 24 September 2008 |
| US | 2017-0275438 | A1 | 28 September 2017 | CN | 107227023 | A | 03 October 2017 |
| | | | | CN | 107227023 | B | 06 November 2020 |
| | | | | DE | 102017002367 | A1 | 28 September 2017 |
| | | | | GB | 2548671 | A | 27 September 2017 |
| | | | | GB | 2548671 | B | 04 August 2021 |
| | | | | JP | 2017-179338 | A | 05 October 2017 |
| | | | | JP | 6113351 | B1 | 12 April 2017 |
| | | | | US | 10662316 | B2 | 26 May 2020 |
| US | 2014-0132383 | A1 | 15 May 2014 | CN | 102693801 | A | 26 September 2012 |
| | | | | CN | 102693801 | B | 20 January 2016 |
| | | | | CN | 103493155 | A | 01 January 2014 |
| | | | | CN | 103493155 | B | 09 November 2016 |
| | | | | CN | 103503088 | A | 08 January 2014 |
| | | | | CN | 103503088 | B | 23 November 2016 |
| | | | | CN | 106876078 | A | 20 June 2017 |
| | | | | CN | 106876078 | B | 06 September 2019 |
| | | | | EP | 2518738 | A1 | 31 October 2012 |
| | | | | EP | 2518738 | B1 | 02 March 2016 |
| | | | | EP | 2704160 | A1 | 05 March 2014 |
| | | | | EP | 2704160 | B1 | 11 December 2019 |
| | | | | HK | 1176738 | A1 | 02 August 2013 |
| | | | | JP | 2012-238828 | A | 06 December 2012 |
| | | | | JP | 2012-238840 | A | 06 December 2012 |
| | | | | JP | 2012-238841 | A | 06 December 2012 |
| | | | | JP | 2012-238842 | A | 06 December 2012 |
| | | | | JP | 4906972 | B1 | 28 March 2012 |
| | | | | JP | 5883437 | B2 | 15 March 2016 |
| | | | | KR | 10-1187350 | B1 | 02 October 2012 |
| | | | | KR | 10-1549094 | B1 | 01 September 2015 |
| | | | | KR | 10-2013-0126737 | A | 20 November 2013 |
| | | | | KR | 10-2014-0012126 | A | 29 January 2014 |
| | | | | TW | 201237894 | A | 16 September 2012 |
| | | | | TW | 201243872 | A | 01 November 2012 |
| | | | | TW | 201303918 | A | 16 January 2013 |
| | | | | TW | I384502 | B | 01 February 2013 |
| | | | | TW | I452580 | B | 11 September 2014 |
| | | | | TW | I453774 | B | 21 September 2014 |
| | | | | US | 2012-0274437 | A1 | 01 November 2012 |
| | | | | US | 2012-0274438 | A1 | 01 November 2012 |
| | | | | US | 2014-0049348 | A1 | 20 February 2014 |
| | | | | US | 2014-0139311 | A1 | 22 May 2014 |
| | | | | US | 2016-0163448 | A1 | 09 June 2016 |
| | | | | US | 8416051 | B2 | 09 April 2013 |
| | | | | US | 8427265 | B2 | 23 April 2013 |

Form PCT/ISA/210 (patent family annex) (July 2019)

**15**

**INTERNATIONAL SEARCH REPORT**
Information on patent family members

International application No.

**PCT/KR2022/004244**

| Patent document cited in search report | Publication date (day/month/year) | Patent family member(s) | | Publication date (day/month/year) |
|---|---|---|---|---|
| | | US | 9030285 B2 | 12 May 2015 |
| | | US | 9287026 B2 | 15 March 2016 |
| | | US | 9287033 B2 | 15 March 2016 |
| | | US | 9472341 B2 | 18 October 2016 |
| | | WO | 2012-147224 A1 | 01 November 2012 |
| | | WO | 2012-147576 A1 | 01 November 2012 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20110042403